# EUROPÄISCHE PATENTSCHRIFT

(11) **EP 1 302 387 B1**
(45) Veröffentlichungstag und Bekanntmachung des Hinweises auf die Patenterteilung: **03.11.2004**
(21) Anmeldenummer: 02020859.1
(22) Anmeldetag: 18.09.2002
(51) Int. Cl.: B62D 21/14, B62D 21/12, B62D 31/02, B62D 65/00

(54) **Modular aufgebautes Fahrgestell für Nutzfahrzeuge**
Modular chassis for utility vehicle
Châssis modulaire pour véhicule utilitaire

(30) Priorität: 10.10.2001 DE 10150052
(43) Veröffentlichungstag der Anmeldung: 16.04.2003
(73) Patentinhaber: DaimlerChrysler AG, 70567 Stuttgart (DE)
(72) Erfinder: Beckmann, Detlev, 73773 Aichwald (DE); Grimm, Karl-Heinz, 72770 Reutlingen (DE); Hagemann, Georg Stefan, 70327 Stuttgart (DE)

(56) Entgegenhaltungen:
- EP-A- 0 591 715
- EP-A- 1 086 884
- WO-A-01/62576
- DE-A- 19 926 607

## Beschreibung

Die Erfindung betrifft ein modular aufgebautes Fahrgestell für ein Nutzfahrzeug, insbesondere für einen Lastkraftwagen.

Verschiedene Lastkraftwagen-Typen, die z.B. nach dem zulässigen Gesamtgewicht eingeteilt sind, besitzen in der Regel speziell dafür ausgelegte Fahrgestelle, die an die jeweiligen Abmessungen der Fahrzeug-Typen sowie an deren Gesamtgewicht individuell konstruktiv angepaßt sind. Funktional gleiche Seitenanbauten, wie z.B. ein Kraftstofftank oder ein Aufnahmebehälter für Batterien od.dgl., sind dann in der Regel zwischen den einzelnen Fahrzeug-Typen nicht austauschbar, so daß eine große Anzahl typenspezifischer Bauteile hergestellt, bevorratet, logistisch verwaltet und zusammengebaut werden muß. Der hierzu erforderliche Aufwand ist relativ groß.

Aus der EP 980 819 A2 ist ein Fahrgestell für ein Nutzfahrzeug bekannt, das einen Zentralträger aufweist, der aus zwei in Fahrzeuglängsrichtung verlaufenden, in Fahrzeugquerrichtung voneinander beabstandeten Längsträgern besteht, die durch Querträger miteinander verbunden sind, sogenannter "Leiterrahmen". Um Fahrzeug-Typen mit unterschiedlicher Fahrzeugbreite zu konfigurieren, sind die Querträger zwischen den Längsträgern geteilt und jeweils in eine gemeinsame Hülse eingeführt, wodurch die Längsträger beim Aufbau des Leiterrahmens bezüglich ihres Abstands voneinander einstellbar sind. Die für den jeweiligen Fahrzeugtyp gewünschte Rahmenbreite wird dann fixiert, indem die Querträgerteile fest mit der Hülse verbunden werden. Des weiteren sind an den Längsträgern quer zur Fahrzeuglängsrichtung seitlich abstehende Auflagen ausgebildet, an denen jeweils eine Seitenrahmeneinheit befestigbar ist. Diese Seitenrahmeneinheiten besitzen dann entsprechende Halterungen, die mit den Auflagen zusammenwirken. Bei Zusammenbau des Fahrgestells besteht auch hier die Möglichkeit, die Seitenrahmeneinheiten quer zum zentralen Leiterrahmen zu positionieren.

Die vorliegende Erfindung beschäftigt sich mit dem Problem, für ein Fahrgestell der eingangs genannten Art eine Ausführungsform anzugeben, die eine Anpassung des Fahrgestells an sich ändernde Abmessungen und Belastungen vereinfacht.

Dieses Problem wird erfindungsgemäß durch ein Fahrgestell mit den Merkmalen des Anspruchs 1 gelöst.

Die Erfindung beruht auf dem allgemeinen Gedanken, einen zentralen Tragrahmen des Fahrgestells durch aneinander und an zumindest zwei parallele Längsträger angebaute selbsttragend ausgebildete Tragmodule zusammenzubauen. Ein auf diese Weise aufgebauter Tragrahmen erhält seine hohen Steifigkeitswerte erst im Verbund, also nach dem Anbau der Tragmodule an die Längsträger und aneinander. Das bedeutet, zum Aufbau des Fahrgestells wird nicht auf einen vorgefertigten Tragrahmen zurückgegriffen, vielmehr kann in Abhängigkeit des gewünschten Fahrzeug-Typs durch die Verwendung entsprechender Tragmodule ein jeweils geeigneter Tragrahmen individuell hergestellt werden. Beispielsweise können zur Herstellung verschiedener Fahrzeug-Typen Längsträger unterschiedlicher Länge und Tragmodule unterschiedlicher Länge, Breite, Anzahl und Steifigkeit verwendet werden. Erfindungsgemäß sind den Tragmodulen an jeder Fahrzeugseite Anbaumodule zugeordnet, die an den Tragmodulen und/oder an den Längsträgern befestigt sind. Zur Reduzierung der Teilevielfalt können die Anbaumodule bei allen Fahrzeug-Typen gleich ausgebildet werden, wodurch sich für die Anbaumodule erhöhte Stückzahlen und somit niedrigere Preise ergeben.

Von besonderem Vorteil ist eine Ausführungsform, bei der die Tragmodule jeweils von unten an den Längsträgern befestigt sind. Durch diese Maßnahmen werden die Tragstrukturen der Tragmodule an ihren freien Enden über die Längsträger fest miteinander verbunden, wodurch sich eine hochwirksame Versteifung der einzelnen Tragrahmen erzielen läßt.

Bei einer vorteilhaften Ausführungsform können sämtliche Tragmodule im wesentlichen das gleiche Wannenprofil aufweisen. Bei dieser Bauweise erhält der Tragrahmen ein unten und im wesentlichen auch seitlich geschlossene Profil, das besonders hohe Steifigkeitswerte besitzt. Außerdem wird durch diese Profilierung des Tragrahmens die Aerodynamik des Fahrzeugs verbessert.

Von Vorteil ist auch eine Ausführungsform, bei der die Anbaumodule mit Schnellbefestigungseinrichtungen an den Längsträgern und/oder an den Tragmodulen lösbar befestigt sind. Durch diese Bauweise kann einerseits der Zusammenbau des Fahrgestells vereinfacht werden. Andererseits kann auch die Demontage der Anbaumodule, z.B. zu Reparatur- oder Wartungszwecken, einfacher durchgeführt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: eine Ansicht von oben auf ein Fahrgestell nach der Erfindung für einen ersten Fahrzeug-Typ,
- Fig. 2: eine Ansicht wie in Fig. 1, jedoch bei einem zweiten Fahrzeug-Typ,
- Fig. 3: einen Querschnitt durch ein am Längsträger angeschlossenes Tragmodul und
- Fig. 4: eine perspektivische Ansicht auf ein an die Längsträger angeschlossenes Tragmodul.

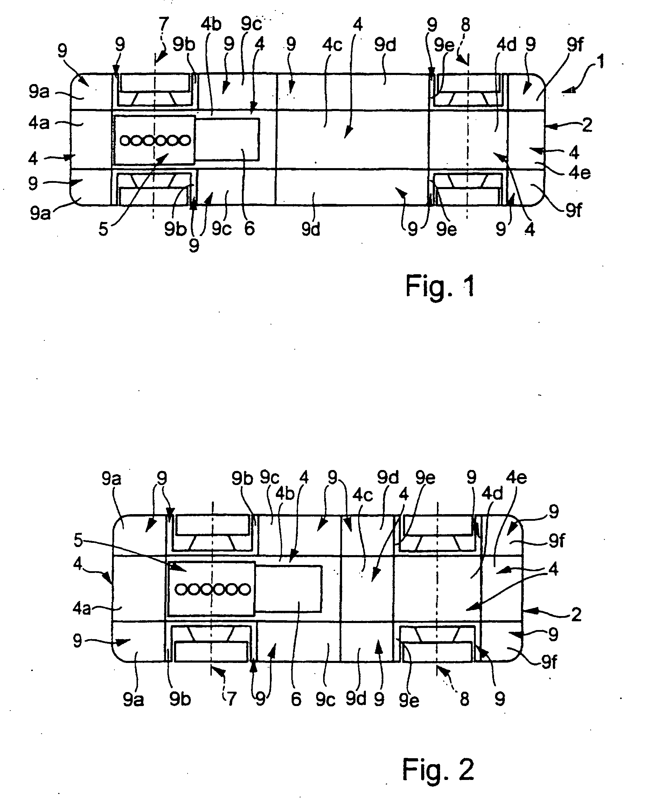

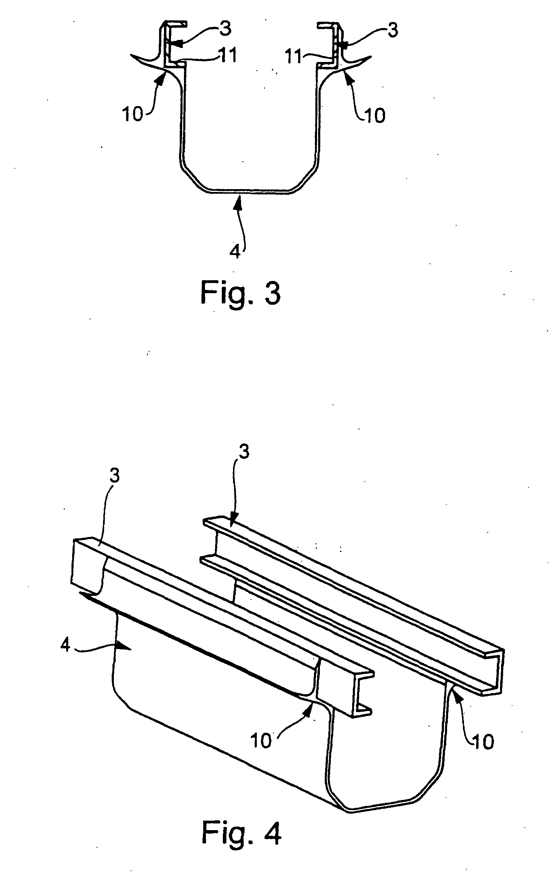

Entsprechend den Fig. 1 und 2 weist ein erfindungsgemäßes Fahrgestell 1 einen zentralen Tragrahmen 2 auf, der sich etwa in der Mitte des Fahrgestells 1 in Fahrzeuglängsrichtung erstreckt. Dieser Tragrahmen 2 besteht im wesentlichen aus zwei parallel zur Fahrzeuglängsrichtung verlaufenden, quer dazu voneinander beabstandeten Längsträgern 3, die in den Fig. 3 und 4 dargestellt sind. Diese Längsträger 3 können über nicht gezeigte Querträger miteinander verbunden sein, um so einen Leiterrahmen auszubilden. Der Tragrahmen 2 weist außerdem mehrere, in Fahrzeuglängsrichtung hintereinander angeordnete und aneinander angrenzende Tragmodule 4 auf, die aneinander und an den Längsträgern 3 befestigt sind.

Im einzelnen handelt es sich bei den Tragmodulen 4 der hier gezeigten Ausführungsform bezüglich der Fahrzeuglängsrichtung von vorn nach hinten um ein Frontmodul 4a, ein Antriebsmodul 4b, ein Mittenmodul 4c, ein Hinterachsmodul 4d und ein Heckmodul 4e. Das Frontmodul 4a kann als Unterfahrschutz sowie als Crashelement ausgebildet sein und kann zur Aufnahme eines nicht gezeigten Luft/Kühlmittel-Wärmetauschers, sogenannter "Kühler" dienen. Dieser Kühler bildet üblicherweise einen Bestandteil eines Kühlkreises einer Brennkraftmaschine 5, die im Antriebsmodul 4b zusammen mit einem Getriebe 6 und einer Vorderachse 7 einschließlich zugehöriger Federn und/oder Dämpfer untergebracht ist.. Zusätzlich kann auch noch ein Retarder im Antriebsmodul 4b untergebracht sein; ebenso ist es möglich, anstelle eines Getriebes eine Getriebe-Retarder-Einheit im Antriebsmodul 4b unterzubringen. Die Vorderachse 7 ist üblicherweise als lenkbare Achse ausgebildet, die angetrieben oder nicht angetrieben sein kann. Im Mittenmodul 4c kann sich beispielsweise eine nicht gezeigte Antriebswelle erstrecken. Des weiteren können auch sonstige Leitungen und Rohre im Mittenmodul 4c untergebracht sein, wie z.B. Pneumatikleitungen, Bremsleitungen, Stromkabel. Das Hinterachsmodul 4d dient zur Unterbringung einer Hinterachse 8, ebenfalls einschließlich der zugehörigen Federungs- und/oder Dämpfungselemente. Die Hinterachse 8 ist üblicherweise angetrieben und ungelenkt. Auch das Heckmodul 4e ist zweckmäßig als Unterfahrschutz sowie als Crashelement ausgebildet. Am Heckmodul 4e kann außerdem eine Anhängerkupplung angebracht sein.

Die einzelnen Tragmodule 4 besitzen jeweils eine selbsttragende Struktur, die im wesentlichen durch ein nach oben offenes U-förmiges Wannenprofil gebildet ist (vgl. Fig. 3 und 4). Zweckmäßig besitzen sämtliche Tragmodule 4 im wesentlichen dasselbe Wangenprofil, um dadurch die Herstellung der einzelnen Tragmodule 4 zu vereinheitlichen.

An jeder Fahrzeugseite sind am Tragrahmen 2 mehrere Anbaumodule 9 angebracht, die dabei an den Längsträgern 3 und/oder an den Tragmodulen 4 befestigt sind. Bei diesen Anbaumodulen 9 handelt es sich im einzelnen beispielsweise um Frontstoßfängereckmodule 9a, die dem Frontmodul 4a zugeordnet sind. Diese Frontstoßfängereckmodule 9a besitzen zweckmäßig jeweils eine Einstiegshilfe, z.B. in Form von Trittstufen, sowie eine Frontleuchteneinheit. Daran schließen Frontkotflügelmodule 9b an, in denen die Räder der Vorderachse 7 laufen. Diese Frontkotflügelmodule 9b sind einem vorderen Abschnitt des Antriebsmoduls 4b zugeordnet. Einem hinteren Abschnitt des Antriebsmoduls 4b sind dann vordere Seitenmodule 9c zugeordnet, von denen das eine z.B. zur Unterbringung einer Abgasanlage der Brennkraftmaschine 5 dient, während das andere beispielsweise zur Unterbringung eines einen Luftfilter enthaltenden Frischlufttrakts dient.

Dem Mittenmodul 4c sind mittlere Seitenmodule 9d zugeordnet, in denen beispielsweise Teile einer Tankanlage zur Versorgung der Brennkraftmaschine 5 mit Kraftstoff untergebracht sein können. An die mittleren Seitenmodule 9d grenzen Heckkotflügelmodule 9e an, die dem Hinterachsmodul 4d zugeordnet sind und in denen die Räder der Hinterachse 8 laufen. Zweckmäßig sind die Frontkotflügelmodule 9b und die Heckkotflügelmodule 9e baugleich ausgebildet, wodurch die Teilevielfalt reduziert werden kann. Schließlich sind dem Heckmodul 4e Heckstoßfängereckmodule 9f zugeordnet, die zweckmäßig jeweils mit einer Heckleuchteneinheit ausgestattet sind.

Um die Montage der Anbaumodule 9 am Tragrahmen 2 zu vereinfachen, können entsprechende Schnellbefestigungseinrichtungen vorgesehen sein, beispielsweise in Form von Schwalbenschwanzkupplungen. Um die Steifigkeit des gesamten Fahrgestells 1 zu erhöhen, können auch benachbarte Anbaumodule 9 aneinander befestigt sein. Auch in diesem Fall können Schnellbefestigungseinrichtungen zweckmäßig sein.

Die hier verwendeten Tragmodule 4 sowie die zugehörigen Anbaumodule 9 bilden ein Modulsystem zum Aufbau des Fahrgestells 2. Mit Hilfe dieses Modulsystems können Fahrgestelle 2 aufgebaut werden, mit denen Fahrzeug-Typen realisierbar sind, die sich hinsichtlich der Fahrzeugbreite und/oder der Fahrzeuglänge und/oder des zulässigen Gesamtgewichts voneinander unterscheiden. Die in den Fig. 1 und 2 gezeigten Fahrgestelle 2 unterscheiden sich zumindest hinsichtlich ihrer Länge sowie hinsichtlich ihrer Breite. Beispielsweise ist das in Fig. 1 dargestellte Fahrgestell 2 zum Aufbau eines relativ schmalen Pritschenwagens geeignet, während das in Fig. 2 gezeigte Fahrgestell zum Aufbau einer Standard-Sattelzugmaschine dient.

Zur Realisierung der unterschiedlichen Fahrzeugbreite ist beim erfindungsgemäßen Modulsystem lediglich der Tragrahmen 2 unterschiedlich aufgebaut, während die daran angebrachten Anbaumodule 9 hinsichtlich ihrer Breite identisch übernommen werden können. Zur Realisierung unterschiedlicher Fahrzeugbreiten werden Tragmodule 4 zum Aufbau des Tragrahmens 2 verwendet, die entsprechend unterschiedliche Breiten besitzen. Dementsprechend sind die für die Ausführungsform gemäß Fig. 2 verwendeten Tragmodule 4 breiter ausgelegt als die Tragmodule 4 der in Fig. 1 gezeigten Variante. Zur Realisierung unterschiedlicher Fahrzeuglängen wird zweckmäßig lediglich ein Tragmodul 4, nämlich das Mittentragmodul 4c mit unterschiedlicher Länge gefertigt, um dadurch die Teilevielfalt möglichst gering zu halten. Darüber hinaus ist es möglich, durch ein weiteres Zusatzachsmodul, das in seinem Aufbau im wesentlichen dem Hinterachsmodul 4d entspricht, weitere Achsen in das Fahrgestell 2 zu integrieren. Beispielsweise kann zwischen dem Antriebsmodul 4b und dem Mittenmodul 4c ein solches Zusatzachsmodul angeordnet werden. Alternativ oder zusätzlich kann auch vor oder hinter dem Hinterachsmodul 4d ein solches Zusatzachsmodul in das Fahrgestell 1 eingebaut werden.

Von besonderem Vorteil ist bei den gezeigten Ausführungsformen der Umstand, daß zur Realisierung unterschiedlicher Fahrzeugbreiten die gleichen Anbaumodule 9 verwendbar sind. Lediglich bei der Darstellung unterschiedlicher Fahrzeuglängen wird auch für das mittlere Seitenmodul 9d eine Ausführungsform mit entsprechend angepaßter Länge verwendet.

Es ist klar, daß zur Realisierung unterschiedlicher Fahrzeuglängen auch die Längsträger 3 in entsprechender Weise dimensioniert werden.

Der erfindungsgemäß vorgeschlagene Aufbau des Tragrahmens 2 hat den Vorteil, daß die jeweils verschiedenen Tragmodule 4 jeweils so ausgebildet sein können, daß der daraus aufgebaute Tragrahmen 2 stets die erforderlichen Festigkeitswerte besitzt, die er für den jeweiligen Fahrzeug-Typ benötigt. Da sich die einzelnen Tragmodule 4 nicht wesentlich voneinander unterscheiden, ist die Herstellung unterschiedlicher Varianten für die Tragmodule 4 sowie für den Tragrahmen 2 relativ preiswert realisierbar.

Entsprechend den Fig. 3 und 4 besitzt jedes Tragmodul 4 an seinen beiden freien Enden 10 einen L-förmigen Absatz 11, mit dem das Tragmodul 4 von unten auf die Längsträger 3 aufgesetzt ist. Die Absätze 11 dienen somit als Sitz für die Längsträger 3, wobei die Befestigung der Tragmodule 4 an den Längsträgern 3 im Bereich dieses Sitzes erfolgt. Beispielsweise werden die Tragmodule 4 mit den Längsträgern 3 verschweißt, vernietet oder verschraubt.

Um aneinander angrenzende Tragmodule 4 miteinander zu verbinden, können geeignete Flanschverbindungen ausgebildet sein. Wichtig ist hierbei, daß sich beim Zusammenbau der Tragmodule 4 und der Längsträger 3 insgesamt ein Fahrgestell 2 hoher Tragfestigkeit ergibt.

Wenn nun Fahrzeug-Typen mit unterschiedlichem zulässigen Gesamtgewicht ausgebildet werden sollen, können auch hier unterschiedliche Tragmodule 4 vorgesehen sein, die sich in Abhängigkeit des bestimmungsgemäßen Fahrzeug-Typs hinsichtlich ihrer Steifigkeitswerte voneinander unterscheiden.

Wenn zur Realisierung unterschiedlicher Fahrzeugtypen sämtliche Tragmodule 4 eine andere Ausführungsform aufweisen, beispielsweise für unterschiedliche Fahrzeugbreiten, sind diese zusammengehörigen Tragmodule 4 zu einer Tragmodul-Gruppe zusammengefaßt. Zur Realisierung unterschiedlicher Fahrzeuglängen muß nur ein Tragmodul 4 dieser Gruppe, zweckmäßig das Mittenmodul 4c, ausgetauscht werden.

## Patentansprüche

1. Modular aufgebautes Fahrgestell für ein Nutzfahrzeug, insbesondere Lastkraftwagen, mit einem Tragrahmen (2), der sich mittig in Fahrzeuglängsrichtung erstreckt, zwei parallel zur Fahrzeuglängsrichtung verlaufende und horizontal voneinander beabstandete Längsträger (3) aufweist und wenigstens die folgenden Tragmodule (4) umfaßt:
- ein Frontmodul (4a), das als Unterfahrschutz und Crashelement ausgebildet ist und zur Aufnahme eines Luft/Kühlmittel-Wärmetauschers dient,
- ein Antriebsmodul (4b), das zur Aufnahme einer Brennkraftmaschine (5), eines Getriebes (6), gegebenenfalls eines Retarders und einer Vorderachse (7) mit Federung und/oder Dämpfung dient,
- ein Mittenmodul (4c),
- wenigstens ein Hinterachsmodul (4d), das zur Aufnahme einer Hinterachse (8) mit Federung und/oder Dämpfung dient, und
- ein Heckmodul (4e), das als Unterfahrschutz und Crashelement ausgebildet ist und zur Aufnahme einer Anhängerkupplung dient,
- wobei die Tragmodule (4) jeweils an beiden Längsträgern (3) und an dem daran angrenzenden Tragmodul (4) bzw. an den daran angrenzenden Tragmodulen (4) befestigt sind und jeweils eine selbsttragende Struktur mit einem nach oben offenen U-förmigen Wannenprofil aufweisen,
- wobei jedem Tragmodul (4) an jeder Fahrzeugseite wenigstens ein Anbaumodul (9) zugeordnet ist, das am zugeordneten Tragmodul (4) und/oder an einem der Längsträger (3) befestigt ist.

2. Fahrgestell nach Anspruch 1,
**dadurch gekennzeichnet,**
**daß** die Tragmodule (4) jeweils von unten an den Längsträgern (3) befestigt sind.

3. Fahrgestell nach Anspruch 2,
**dadurch gekennzeichnet,**
**daß** jedes Tragmodul (4) an beiden freien Enden (10) des Wannenprofils einen L-förmigen Absatz (11) besitzt, der als Sitz für einen der Längsträger (3) dient.

4. Fahrgestell nach einem der Ansprüche 1 bis 3,
**dadurch gekennzeichnet,**
**daß** sämtliche Tragmodule (4) im wesentlichen das gleiche Wannenprofil aufweisen.

5. Fahrgestell nach einem der Ansprüche 1 bis 4,
**dadurch gekennzeichnet,**
**daß** die Anbaumodule (9) die folgenden Module umfassen:
- zwei dem Frontmodul (4a) zugeordnete Frontstoßfängereckmodule (9a), die jeweils eine Einstiegshilfe sowie eine Frontleuchteneinheit aufweisen, und/oder
- zwei dem Antriebsmodul(4b) zugeordnete Frontkotflügelmodule (9b), und/oder
- zwei dem Antriebsmodul (4b) zugeordnete vordere Seitenmodule (9c), von denen das eine zur Aufnahme einer Abgasanlage und das andere zur Aufnahme eines Frischlufttrakts dient, und/oder
- zwei dem Mittenmodul (4c) zugeordnete mittlere Seitenmodule (9d), von denen wenigstens eines zur Aufnahme einer Kraftstoffanlage dient, und/oder
- zwei dem Hinterachsmodul (4d) zugeordnete Heckkotflügelmodule (9e), und/oder
- zwei dem Heckmodul (4e) zugeordnete Heckstoßfängereckmodule (9f), die jeweils eine Heckleuchteneinheit aufweisen.

6. Fahrgestell nach Anspruch 5,
**dadurch gekennzeichnet,**
**daß** die Frontkotflügelmodule (9b) und die Heckkotflügelmodule (9e) baugleich ausgebildet sind.

7. Fahrgestell nach einem der Ansprüche 1 bis 6,
**dadurch gekennzeichnet,**
**daß** die Anbaumodule mit Schnellbefestigungseinrichtungen an den Längsträgern (3) und/oder an den Tragmodulen (4) lösbar befestigt sind.

8. Fahrgestell nach einem der Ansprüche 1 bis 7,
**dadurch gekennzeichnet,**
**daß** wenigstens ein weiteres als Tragmodul (4) ausgebildetes Zusatzachsmodul (4) vorgesehen ist, das zur Aufnahme einer weiteren Fahrzeugachse mit Federung/oder Dämpfung dient und zwischen Antriebsmodul (4b) und Mittenmodul (4c) oder zwischen Mittenmodul (4c) und Hinterachsmodul (4d) oder zwischen Hinterachsmodul (4d) und Heckmodul (4e) am Tragrahmen (2) angeordnet ist, dem ebenfalls an jeder Seite ein als Anbaumodul ausgebildetes Kotflügelmodul zugeordnet ist

9. Fahrgestell nach Anspruch 8,
**dadurch gekennzeichnet,**
**daß** die Kotflügelmodule des Zusatzachsmoduls baugleich mit den Frontkotflügelmodulen (9b) und/oder mit den Heckkotflügelmodulen (9e) ausgebildet ist.

10. Modulsystem zum Aufbau eines Fahrgestells nach einem der Ansprüche 1 bis 9, das zum Aufbau von Fahrzeug-Typen, die sich hinsichtlich der Fahrzeugbreite voneinander unterscheiden, wenigstens zwei Gruppen von Tragmodulen (4) vorgesehen sind, die zur Ausbildung von Tragrahmen (2) unterschiedlicher Breite dimensioniert sind, wobei die jeweiligen Anbaumodule (9) bei diesen Tragmodulgruppen hinsichtlich ihrer Breite gleich ausgebildet sind.

11. Modulsystem nach Anspruch 10,
**dadurch gekennzeichnet,**
**daß** das Mödulsystem zum Aufbau von Fahrzeug-Typen, die sich hinsichtlich der Fahrzeuglänge voneinander unterscheiden, wenigstens zwei verschieden lange Mittenmodule (4c) mit zugehörigen mittleren Seitenmodulen (9d) entsprechender Länge sowie zwei Paar entsprechend lange Längsträger (3) vorgesehen sind.

12. Modulsystem nach Anspruch 10 oder 11,
**dadurch gekennzeichnet,**
**daß** das Modulsystem zum Aufbau von Fahrzeug-Typen, die sich hinsichtlich des zulässigen Gesamtgewichts voneinander unterscheiden, wenigstens zwei Gruppen von Tragmodulen (4) aufweist, die sich hinsichtlich ihrer Stabilität voneinander unterscheiden, wobei die jeweiligen Anbaumodule (9) bei diesen Gruppen hinsichtlich ihrer Stabilität gleich ausgebildet sind.

## Claims

1. A chassis of modular construction for a commercial vehicle, in particular a lorry, having a supporting frame (2) which extends centrally along the vehicle and two side members (3) which extend parallel to the longitudinal axis of the vehicle and are spaced horizontally a certain distance apart, and comprising at least the following supporting modules (4):
- a front module (4a) which is designed as an underside protection and crash element and serves to receive an air/coolant heat exchanger,
- a drive module (4b) which serves to receive an internal combustion engine (5), a transmission (6), where appropriate a retarder and a front axle (7) with suspension and/or damping,
- a central module (4c),
- at least one rear axle module (4d) which serves to receive a rear axle (8) with suspension and/or damping, and
- a rear module (4e) which is designed as an underside protection and crash element and serves to receive a trailer hitch,
- the supporting modules (4) being fixed to both side members (3) and to any supporting module(s) (4) adjacent thereto and having a unitised structure with a U-shaped trough section open to the top,
- there being associated with each supporting module (4) on each side of the vehicle at least one bolt-on module (9) which is fixed to the associated supporting module (4) and/or one of the side members (3).

2. A chassis in accordance with claim 1,
**characterised in that**
the supporting modules (4) are fixed to the side members (3) from beneath.

3. A chassis in accordance with claim 2,
**characterised in that**
each supporting module (4) has an L-shaped projection (11) at each free end of the trough section which serves as a seat for one of the side members (3).

4. A chassis in accordance with one of claims 1 to 3,
**characterised in that**
all the supporting modules (4) have essentially the same trough section.

5. A chassis in accordance with one of claims 1 to 4,
**characterised in that**
the bolt-on modules (9) comprise the following modules:
- two front bumper corner modules (9a) associated with the front module (4a) each having an entry device and a front light unit, and/or
- two front wing modules (9b) associated with the drive module (4b) and/or
- two front side modules (9c) associated with the drive module (4b), one serving to receive an exhaust system and the other to receive an air intake train, and/or
- two central side modules (9d) associated with the central module (4c), at least one of which serves to receive a fuel system, and/or
- two rear wing modules (9e) associated with the rear axle module (4d), and/or
- two rear bumper corner modules (9f) associated with the rear module (4e) each of which has a rear light unit.

6. A chassis in accordance with claim 5,
**characterised in that**
the front wing modules (9b) and the rear wing modules (9e) are identical in design.

7. A chassis in accordance with one of claims 1 to 6,
**characterised in that**
the bolt-on modules are fixed to the side members (3) and/or to the supporting modules (4) by means of quick fastening devices in such a manner that they can be detached.

8. A chassis in accordance with one of claims 1 to 7,
**characterised in that**
at least one further additional axle module (4) designed as a supporting module (4) is provided which serves to receive a further vehicle axle with suspension and/or damping and is positioned on the supporting frame (2) between the drive module (4b) and the central module (4c) or between the central module (4b) and the rear axle module (4d) or between the rear axle module (4d) and the rear module (4e) and with which a wing module designed as a bolt-on module is associated on each side.

9. A chassis in accordance with claim 8,
**characterised in that**
the wing modules of the additional axle module are identical in design to the front wing modules (9b) and/or the rear wing modules (9e).

10. A modular system for the construction of a chassis in accordance with one of claims 1 to 9,
**characterised in that**
the modular system for the construction of vehicle types which differ in terms of vehicle width, has at last two groups of supporting modules (4) which are dimensioned for the creation of supporting frames (2) of different width, the various bolt-on modules (9) for these groups being of identical design in terms of their width.

11. A modular system in accordance with claim 10,
**characterised in that**
the modular system for the construction of vehicle types which differ in terms of vehicle length has at least two different length central modules (4c) with corresponding central lateral modules (9d) of corresponding length and two pairs of side members (3) of corresponding length.

12. A modular system in accordance with claim 10 or 11,
**characterised in that**
the modular system for the construction of vehicle types which differ in terms of their permissible total weight has at least two groups of supporting modules (4) which differ in terms of their stability, the various bolt-on modules (9) for these groups being of identical design in terms of their stability.

## Revendications

1. Châssis modulaire pour un véhicule utilitaire, en particulier un camion, avec un cadre support (2) s'étendant centralement dans la direction longitudinale du véhicule, deux longerons (3), s'étendant parallèlement à la direction longitudinale du véhicule et espacés horizontalement l'un de l'autre, et comprenant au moins les modules support (4) suivants :
- un module avant (4a), réalisé sous forme de protection sous véhicule et d'élément anti-collision et servant à loger un échangeur de chaleur air/fluide de refroidissement,
- un module d'entraînement (4b), servant à loger un moteur à combustion interne (5), une transmission (6), le cas échéant un ralentisseur et un essieu avant (7) avec une suspension et/ou un amortissement,
- un module central (4c),
- au moins un module d'essieu arrière (4d) servant à loger un essieu arrière (8) avec une suspension et/ou un amortissement, et
- un module arrière (4e), réalisé sous la forme de protection sous véhicule et d'éléments anti-collision et servant à loger un attelage de remorque,
- où les modules support (4) sont fixés sur deux longerons (3) et sur le module support (4) y étant limitrophe, respectivement sur les modules support (4) y étant limitrophes, et présentent chacun une structure autoporteuse avec un profil en auge en forme de U ouvert vers le haut,
- où à chaque module support (4) est associé de chaque côté du véhicule au moins un module rapporté (9), fixé sur le module support (4) associé et/ou sur l'un des longerons (3).

2. Châssis selon la revendication 1, **caractérisé en ce que** les modules support (4) sont chacun fixés par le dessous sur les longerons (3).

3. Châssis selon la revendication 2, **caractérisé en ce que** chaque module support (4) présente, sur les deux extrémités (10) libres du profil en auge, un décrochement (11) en forme de L servant de siège à l'un des longerons (3).

4. Châssis selon l'une des revendications 1 à 3, **caractérisé en ce que** l'ensemble des modules support (4) présentent pratiquement le même profil en auge.

5. Châssis selon l'une des revendications 1 à 4, **caractérisé en ce que** les modules rapportés (9) comprennent les modules suivants :
- deux modules d'angle de pare-chocs avant (9a) associé au module avant (4a), présentant chacun une aide à la montée dans le véhicule, ainsi qu'une unité d'éclairage avant, et/ou
- deux modules d'ailes avant (9b) associés au module d'entraînement (4b), et/ou
- deux modules latéraux avant (9c) associés au module d'entraînement (4b), dont l'un sert à loger une installation de gaz d'échappement et l'autre à loger un conduit d'air neuf, et/ou
- deux modules latéraux (9d) centraux, associés au module central (4c), dont au moins l'un sert à loger une installation à carburant, et/ou
- deux modules d'ailes arrière (9e) associés au module d'essieu arrière (4d), et/ou
- deux modules d'angle de pare-chocs arrière (9f) associés au module arrière (4e), présentant chacun une unité d'éclairage arrière.

6. Châssis selon la revendication 5, **caractérisé en ce que** les modules d'ailes avant (9b) et les modules d'ailes arrière (9e) sont de construction identique.

7. Châssis selon l'une des revendications 1 à 6, **caractérisé en ce que** les modules rapportés sont fixés de façon désolidarisable à l'aide de dispositifs de fixation rapide sur les longerons (3) et/ou sur les modules support (4).

8. Châssis selon l'une des revendications 1 à 7, **caractérisé en ce qu'**au moins un autre module d'essieu additionnel (4), réalisé sous forme de module support (4), est prévu, servant à supporter un autre essieu de véhicule avec une suspension/ou un amortissement et disposé entre le module d'entraînement (4b) et le module central (4c), ou entre le module central (4c) et le module d'essieu arrière (4d), ou entre le module d'essieu arrière (4d) et le module arrière (4e), sur le cadre support (2), auquel est associé également de chaque côté un module d'aile, réalisé sous la forme de module rapporté.

9. Châssis selon la revendication 8, **caractérisé en ce que** les modules d'ailes du module d'essieu additionnel sont de construction identique aux modules d'ailes avant (9b) et/ou aux modules d'ailes arrière (9e).

10. Système modulaire de construction d'un châssis selon l'une des revendications 1 à 9, **caractérisé en ce que**, pour construire des types de véhicules qui se distinguent les uns des autres au niveau de la largeur de véhicule, au moins deux groupes de module support (4) sont prévus, dimensionnés pour réaliser des cadres support (2) de largeur différente, les modules rapportés (9) respectifs étant, du point de vue de leur largeur, de configuration identique pour ces groupes de module support.

11. Système modulaire selon la revendication 10, **caractérisé en ce que**, pour construire des types de véhicules qui se distinguent les uns des autres au niveau de la longueur du véhicule, le système modulaire présente au moins deux modules centraux (4c) de longueur différente avec des modules latéraux (9d) centraux afférents de longueur correspondante, ainsi que deux paires de longerons (3) de longueur correspondante.

12. Système modulaire selon la revendication 10 ou 11, **caractérisé en ce que**, pour construire des types de véhicules qui se distinguent les uns des autres au niveau du poids global admissible, le système modulaire présente au moins deux groupes de modules support (4) qui se distinguent les uns des autres au niveau de leur stabilité, sachant que les modules rapportés (9) respectifs dans ces groupes sont réalisés à l'identique du point de vue de leur stabilité.
